# EUROPEAN PATENT SPECIFICATION

(11) **EP 1 059 720 B1**
(45) Date of publication and mention of the grant of the patent: **27.10.2004**
(21) Application number: 00109168.5
(22) Date of filing: 08.05.2000
(51) Int. Cl.: H02G 9/10, H02B 1/56, H02B 7/08

(54) **Underground equipment housing**
Unterirdisches Gehäuse für Geräte
Boîtier souterrain pour équipement

(30) Priority: 04.06.1999 AU 3319299
(43) Date of publication of application: 13.12.2000
(73) Proprietor: ALCATEL, 75008 Paris (FR)
(72) Inventor: Mowat, Scott, Bondi Junction, New South Wales 2022 (AU); Counsell, Matthew, Ryde, New South Wales 2112 (AU); Morrison, James Crowther, Thornleigh, New South Wales 2120 (AU); Brice, Lindsay, Glebe, New South Wales 2037 (AU)
(74) Representative: Rausch, Gabriele, Dr.

(56) References cited:
- DE-A- 4 403 142
- US-A- 4 709 120

## Description

This invention relates to underground equipment housings, particularly for equipment which generates waste heat energy. The removal of waste heat is a problem for underground equipment, particularly for equipment stored in pits which closely confine the equipment housing, as there is little or no air movement in an enclosed pit. The air around the housing in an enclosed pit effectively acts as a thermal insulator to retard dissipation of heat.

Known underground housings are usually made of metal which provides a degree of thermal conduction between the inside of the housing and the material forming a base of the pit. The pit is usually made of concrete. However, increasing demands on the complexity of equipment required to be installed also increase the amount of waste heat to be removed.

Metal housing also have the disadvantage of being prone to corrosion in moist conditions often found in underground pits.

Document DE 44 03 142 A, which is considered to represent the closest prior art, discloses an electronic transformer station. Said transformer station comprises a chamber having walls enclosing a transformer as well as coordinated electronic devices. The transformer and said electronic devices generate waste heat which is drawn from them by a fan. The airflow generated by the fan is guided against and alongside the walls of said chamber in order to lead the heat away from the inner chamber to the outside of said chamber by using the heat conductivity of the walls of said chamber.

Starting from that prior art it is the object of the invention to improve a known equipment cooling arrangement as well as an equipment housing installation such that their heat removal is improved.

This object is solved by the subject-matter of claim 1. In particular, it is achieved in that a floor of the equipment housing comprises airflow interference means and in that the fan is directed to blow the air against said interference means.

Said airflow interference means have the advantage that the airflow generated by a movement of the fan and blown against said interference means is disturbed and turbulences are created with the result that an improved heat removal is achieved.

Preferably, the equipment is housed in a cowling through which the intake for the fan is drawn, the cowling having one or more openings to admit air to be drawn in by the fan.

In a preferred embodiment, the base of the housing includes an internal recess which projects below the level of the base of the housing, the output of the fan being directed into the recess.

In a further embodiment, the floor of the pit is covered in a layer of particulate material such as sand, gravel, fines etc having thermal conductivity sufficient to remove enough waste heat to retain the temperature within the housing at or below its upper permitted limit.

In a further embodiment, the housing is made of a plastics material such as polyurethane. This has the advantage that plastics are more resistant to corrosion than metal. Polyurethane has a thermal conductivity of the same order as sand, so there is little difference in the rate at which heat is conducted away from the housing.

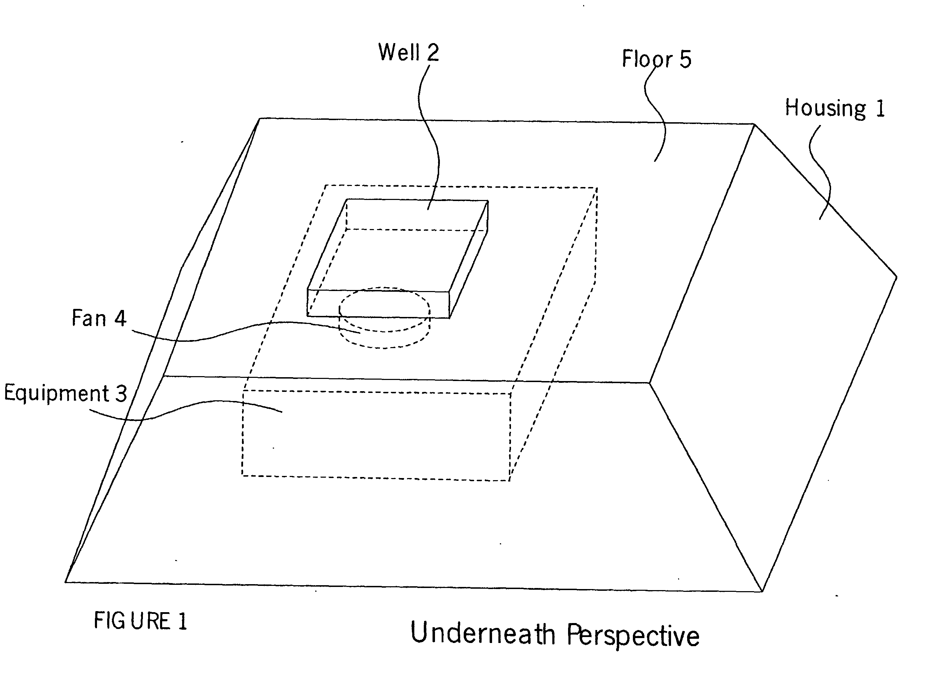

Figure 1 shows an underneath view of a housing embodying the invention.
Figure 2 shows an advantageous embodiment of the housing in which the equipment is fixed to a hinged lid to facilitate access.

The invention will be described with reference to the accompanying drawing, in which a housing 1 is shown inverted.

The housing contains equipment 3, preferably enclosed on in a cowling. A fan 4 draws air from the equipment and blows it against the floor 5 of the housing. The cowling, if used, is provided with openings to permit air to be drawn past the equipment.

Preferably, there is a recess or "well" 2 in the floor of the housing and the output from the fan 4 is directed to the well 2. The walls of the well 2 disrupt the airflow and create turbulence.

As an alternative to a recessed well, other arrangements such as raised ribs inside and/or outside the housing floor may be used.

The circulation of the air past the equipment removes heat form the equipment and blowing the air against the floor helps transfer the heat to the floor and to the material on which the floor is resting.

In practice the housing may be placed in a pit, with the floor of the housing resting on the bottom of the pit.

To aid the removal of heat, the bottom of the pit may be covered by a layer of sand or other suitable particulate material capable of conducting heat form the housing.

In a further embodiment, the housing is made of plastics material such as polyurethane. This has the advantage that polyurethane is less subject to corrosion in the environment of a pit than most metal housings. We have found that the thermal conductivity of polyurethane is of the same order as that of sand, so the use of polyurethane does not significantly impede heat transfer through the floor to the sand base.

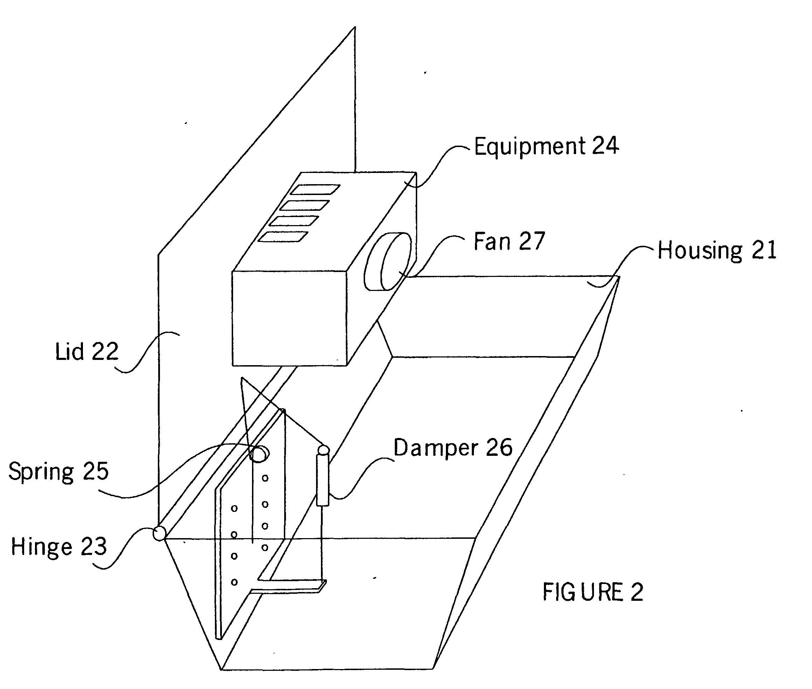

In a further preferred embodiment, shown in Figure 2, the lid of the housing is hinged, and the equipment is fixed to the lid to facilitate access to the equipment.

In Figure 2, the housing 21 is shown with lid 22 raised. The equipment 24 is attached to the lid for easy access. A counterbalancing means such as spring 25 helps to reduce the lifting load for the lid.

Preferably a damper 26 is included to prevent jarring when closing the lid.

The fan 27 may be fixed to the floor. Alternatively it may be fixed in relation to the equipment by being attached to the lid. The optional cowling shown in Figure 2 includes a series of slots to admit air. The fan is located in a hole in a wall of the cowling so that the intake of the fan is via the cowling.

## Claims

1. An equipment cooling arrangement including an equipment housing (1, 21) containing equipment (3, 24) which generates waste heat, and a fan (4, 27) arranged to draw air from the equipment (3, 24)
**characterized in that**
a floor (5) of the equipment housing (1, 21) comprises airflow interference means; and
the fan (4, 27) is directed to blow the air against said interference means.

2. An arrangement as claimed in claim 1 wherein the airflow interference means includes a recess (2) in the floor (5) of the housing (1, 21).

3. An arrangement as claimed in claim 1 wherein the airflow interference means includes one or more projecting fins.

4. An arrangement as claimed by any of claims 1 to 3, wherein the housing (1, 21) is made of a plastics material.

5. An arrangement as claimed in claim 4 wherein the plastics material is polyurethane.

6. An arrangement as claimed in any one of claims 1 to 5 including a cowling enclosing the equipment (3, 24), the cowling including one or more vents to permit air to be drawn past the equipment (3, 24) by the fan (4, 27), the fan being arranged to pass through a wall of the cowling.

7. An arrangement as claimed in any one of claims 1 to 6, wherein the housing (1, 21) has a hinged lid (22, 23) and wherein the equipment (3, 24) is attached to the lid (22) to facilitate access.

8. An arrangement as claimed in claim 7 including counterbalance means to reduce the lifting load when opening the lid (22).

9. An equipment housing installation including an arrangement as claimed in any one of claims 1 to 8 installed in a pit, wherein the base of the pit is covered with a layer of granular material to conduct heat away from the base (5).

10. An installation as claimed in claim 9, wherein the granular material is sand.

## Patentansprüche

1. Eine Anordnung zur Kühlung von Geräten, die ein GeräteGehäuse (1, 21) umfasst, das ein Gerät (3, 24) enthält, welches Verlustwärme erzeugt, und einen Ventilator (4, 27), der so angeordnet ist, dass er Luft vom Gerät (3, 24) zieht
**dadurch gekennzeichnet, dass**
ein Boden (5) des Geräte-Gehäuses (1, 21) Mittel zur Störung des Luftflusses enthält; und
der Ventilator (4, 27) so gerichtet ist, dass er die Luft gegen die Mittel zur Störung des Luftflusses bläst.

2. Eine Anordnung wie in Anspruch 1 beansprucht, worin die Mittel zur Störung des Luftflusses eine Vertiefung (2) im Boden (5) des Gehäuses (1, 21) enthalten.

3. Eine Anordnung wie in Anspruch 1 beansprucht, worin die Mittel zur Störung des Luftflusses eine oder mehrere vorstehende Rippen enthalten.

4. Eine Anordnung wie in einem beliebigen der Ansprüche 1 bis 3 beansprucht, worin das Gehäuse (1, 21) aus einem Kunststoffmaterial hergestellt ist.

5. Eine Anordnung wie in Anspruch 4 beansprucht, worin das Kunststoffmaterial Polyurethan ist.

6. Eine Anordnung wie in einem beliebigen der Ansprüche 1 bis 5 beansprucht, die eine Haube enthält, welche das Gerät (3, 24) umschließt, wobei die Haube ein oder mehrere Lüftungsöffnungen aufweist, damit vom Ventilator (4, 27) Luft hinter das Gehäuse (3, 24) gezogen werden kann, wobei der Ventilator so angeordnet ist, dass er durch eine Wand der Haube hindurch geht.

7. Eine Anordnung wie in einem beliebigen der Ansprüche 1 bis 6 beansprucht, worin das Gehäuse (1, 21) einen mit Scharnieren versehenen Deckel (22, 23) hat, und worin das Gerät (3, 24) am Deckel (22) befestigt ist, um den Zugang zu erleichtern.

8. Eine Anordnung, wie in Anspruch 7 beansprucht, die Ausgleichs-Mittel zur Verringerung der Hebekraft beim Öffnen des Deckels (22) enthält.

9. Eine Geräte-Gehäuse-Installation, die eine Anordnung enthält, wie in einem beliebigen der Ansprüche 1 bis 8 beansprucht, die in einer Grube installiert ist, worin der Boden der Grube mit einer Schicht aus körnigem Material bedeckt ist, um die Wärme vom Boden (5) weg zu leiten.

10. Eine Installation, wie in Anspruch 9 beansprucht, worin das körnige Material Sand ist.

## Revendications

1. Agencement de refroidissement d'appareillage comprenant un coffret d'appareillage (1, 21) contenant l'appareillage (3, 24) qui génère des rejets thermiques, et un ventilateur (4, 27) agencé pour aspirer l'air provenant de l'appareillage (3, 24),
**caractérisé en ce qu'**un plancher (5) du coffret d'appareillage (1, 21) comprend des moyens d'interférence d'écoulement d'air ; et
le ventilateur (4, 27) est dirigé pour souffler l'air contre lesdits moyens d'interférence.

2. Agencement selon la revendication 1, dans lequel les moyens d'interférence d'écoulement d'air comprennent un enfoncement (2) dans le plancher (5) du coffret (1, 21).

3. Agencement selon la revendication 1, dans lequel les moyens d'interférence d'écoulement d'air comprennent une ou plusieurs ailettes en saillie.

4. Agencement selon l'une quelconque des revendications 1 à 3, dans lequel le coffret (1, 21) est réalisé à partir d'une matière plastique.

5. Agencement selon la revendication 4, dans lequel la matière plastique est du polyuréthane.

6. Agencement selon l'une quelconque des revendications 1 à 5 comprenant un capot enfermant l'appareillage (3, 24), le capot comprenant un ou plusieurs évents pour permettre à l'air d'être aspiré au-delà de l'appareillage (3, 24) par le ventilateur (4, 27), le ventilateur étant agencé pour passer à travers une paroi du capot.

7. Agencement selon l'une quelconque des revendications 1 à 6, dans lequel le logement (1, 21) possède un couvercle articulé (22, 23) et dans lequel l'appareillage (3, 24) est fixé au couvercle (22) pour faciliter l'accès.

8. Agencement selon la revendication 7 comprenant des moyens de contrepoids pour réduire la charge de soulèvement lors de l'ouverture du couvercle (22).

9. Installation de coffret d'appareillage comprenant un agencement selon l'une quelconque des revendications 1 à 8 installé dans un puit, dans lequel la base du puit est recouverte avec une couche de matériau granulaire pour éloigner la chaleur de la base (5).

10. Installation selon la revendication 9, dans laquelle le matériau granulaire est du sable.
